# FASCICULE DE BREVET EUROPEEN

(11) **EP 0 813 049 B1**
(45) Date de publication et mention de la délivrance du brevet: **30.10.2002**
(21) Numéro de dépôt: 97450012.6
(22) Date de dépôt: 06.06.1997
(51) Int. Cl.: G01M 9/06, G01D 11/30

(54) **Dispositif instrumenté de faible épaisseur formant peau**
Dünner, flexibler flächenförmiger Sensor
Flexible thin film sensor

(30) Priorité: 10.06.1996 FR 9607384
(43) Date de publication de la demande: 17.12.1997
(73) Titulaire: AEROSPATIALE SOCIETE NATIONALE INDUSTRIELLE, Société Anonyme, 75781 Paris Cedex 16 (FR)
(72) Inventeur: Lopez, Christian, 31530 Le Castera (FR)
(74) Mandataire: Thébault, Jean-Louis

(56) Documents cités:
- US-A- 2 440 198
- US-A- 4 727 751
- US-A- 4 782 319

## Description

La présente invention a pour objet un dispositif instrumenté de très faible épaisseur telle une peau, prévu pour être rapporté de façon amovible sur une surface quelconque, notamment en vue de l'étude des écoulements aérodynamiques sur une paroi extérieure de structure d'aéronef.

L'étude des écoulements aérodynamiques sur des structures ayant à se déplacer à grande vitesse dans l'atmosphère est extrêmement importante.

Pour des véhicules terrestres, c'est l'amélioration des performances qui peut être recherchée en vue d'obtenir des gains en vitesse ou en consommation par exemple ou même en confort par rapport au bruit mais aussi pour des améliorations de tenue de route.

Pour les aéronefs, plus particulièrement les avions de ligne, on sait que l'étude des écoulements aérodynamiques est encore plus importante, pour l'amélioration des performances en vol et notamment pour diminuer la traînée, c'est-à-dire le passage de l'écoulement de l'air sur la structure du régime laminaire au régime turbulent.

Ces études permettent de réaliser des diminutions notables de la consommation de carburant, ce qui se traduit par un avion moins cher en exploitation ou ayant un plus grand rayon d'action pour une même quantité de carburant embarquée.

De telles études peuvent aussi permettre des diminutions d'émissions sonores ou de pallier celles-ci par traitement de zones localisées.

On comprend, à travers ces quelques cas d'application bien loin d'être exhaustifs, que la possibilité d'effectuer différents types de mesure des écoulements aérodynamiques est une nécessité.

Les types de mesures susceptibles d'intéresser l'homme de l'art sont très variés et correspondent à des instrumentations aussi variées que des :
- prises de pression statique, reliées à des capteurs de pression situés dans des zones accessibles,
- capteurs de pression instationnaires permettant de mesurer des variations dans un spectre allant des turbulences jusqu'au domaine de l'acoustique,
- films chauds.

On cherche aussi à mettre en évidence la qualité des écoulements par contraste thermique à l'aide de :
- moyens de visualisation infrarouge des variations de température des structures échauffées,
- cristaux liquides permettant de visualiser l'écoulement sur des structures réchauffées et régulées thermiquement .

Les contraintes pour réaliser de telles mesures in situ sont alors nombreuses.

Il faut en effet que l'instrumentation perturbe le plus faiblement possible les écoulements en sorte d'obtenir des mesures vraies.

L'instrumentation sur un avion est soumise à des écarts de températures très importants, de plus de 100°C, à des sollicitations mécaniques violentes, notamment à l'arrachement et à des conformations de surface d'apposition non nécessairement planes.

D'autre part, de telles mesures trouvent un intérêt lors de mesures en soufflerie certes mais aussi et surtout lors de mesures sur des avions en vol.

Or on comprend que des modifications de la structure d'un avion telles que des perçages ou des usinages sont difficilement envisageables. Ces modifications conduisent à des coûts de campagnes de mesures rédhibitoires car tout usinage sur la structure nécessite des études et calculs complémentaires au moins pour déterminer l'impact de telles modifications, ce qui se traduit généralement par une procédure de mise en oeuvre des modifications qu'il est souvent impossible d'appliquer sur l'avion en dehors des ateliers.

Une fois de telles modifications réalisées et utilisées aux fins desquelles elles étaient destinées, généralement une campagne de mesures et d'enregistrements à l'aide d'appareils d'acquisition disposés dans la structure, il s'avère nécessaire de ramener la structure dans sa configuration première, ceci lorsque les modifications peuvent être considérées comme réversibles.

Cette remise en état, colmatages des perçages, masticages, peintures, engendre des frais, du temps et de l'immobilisation de l'avion dans les ateliers.

L'instrumentation, même si l'on fait abstraction des inconvénients précités, doit être aussi peu perturbante que possible, ce qui est complexe sauf à réaliser de profondes modifications de structures.

Il subsiste aussi le problème des liaisons filaires de l'instrumentation entre les appareils d'acquisition et les capteurs pour lesquels les usinages ont été prévus.

On connaît par le brevet américain US-A-5 149 387, un montage visant à fixer sur la structure une plaque en fibre de verre avec un montage des capteurs mettant en oeuvre une procédure délicate dont une étape est notamment une mise sous vide de la zone d'implantation du capteur.

Un dispositif selon le préambule de la revendication 1 est connu de US-A-2440198.

Afin de pallier les inconvénients de l'art antérieur, la présente invention permet une instrumentation qui ne provoque aucune détérioration de la structure et qui est d'un prix de revient peu élevé puisqu'elle peut être mise en place sur la structure sans nécessiter une mise en atelier. En effet, pour un aéronef, plus particulièrement un avion, le dispositif instrumenté selon l'invention peut être mis en place et retiré sur site, en dehors des ateliers, à tout moment de la campagne d'essais en vol par exemple, ceci tout en appliquant une procédure et une méthodologie garantissant la qualité et la reproductibilité. Les dispositifs sont, eux, fabriqués en atelier en prenant en compte toutes les contraintes générées par le lieu d'apposition.

La présente invention présente un intérêt tout particulier en ce sens que la dépose du dispositif n'engendre aucune remise en état mécanique.

Le dispositif instrumenté selon l'invention permet le montage de nombreux types de capteurs, qui peuvent d'ailleurs être panachés suivant les besoins.

Les coûts d'une telle instrumentation sont réduits, ceci pour plusieurs raisons :
- courte durée de pose et de dépose, donc courte durée d'immobilisation, et dans tous les cas sur site,
- préfabrication en atelier des dispositifs prêts pour la pose, ceci en mettant en oeuvre des opérations standardisées dans de bonnes conditions avec des outillages et des moyens généralement disponibles dans ces ateliers, surtout dans ceux des avionneurs,
- possibilité de modification relativement rapide du dispositif, et
- mise en place sur un véhicule, notamment un avion, sur un site différent de celui de la fabrication, et
- recours à des matériaux du commerce pour la partie consommable du dispositif d'instrumentation.

A cet effet, le dispositif instrumenté selon l'invention, notamment pour l'étude des écoulements aérodynamiques sur une structure, plus particulièrement celle d'un aéronef en vol, comprend un support formant une plaque de très faible épaisseur, prévue pour être apposée et conformée sur une zone déterminée de ladite structure, ainsi qu'une instrumentation rapportée sur ce support et comprenant des liaisons filaires, et est caractérisé par des moyens de liaison par collage interposés entre une partie de la surface de la face inférieure du support et cette zone déterminée, en laissant un espace de faible hauteur entre la face inférieure du support et la zone déterminée correspondant sensiblement à l'épaisseur des moyens de collage, une partie des éléments de ladite instrumentation ainsi que les liaisons filaires étant logées dans cet espace délimité par la face inférieure du support et la zone déterminée de la structure, l'ensemble formant alors une peau sur ladite structure.

Selon un mode de réalisation particulier, les moyens de liaison par collage comprennent du ruban adhésif double-face d'une épaisseur de l'ordre du millimètre.

Ce ruban adhésif comprend du ruban adhésif type mousse "Néoprène", disposé en bandes, parallèlement aux filets d'air et du ruban adhésif de forte tenue, type acrylique, disposé en bandes, perpendiculairement aux filets d'air.

Plus particulièrement, le support est une plaque métallique ou en matériau polymère de faible largeur et de grande longueur en sorte de pouvoir couvrir la zone retenue et se prolonger jusqu'à proximité d'une zone naturelle d'accès à l'intérieur de la structure.

Il est en outre prévu un chanfrein sur la périphérie du support.

Ce chanfrein est composé d'un ruban disposé autour de la périphérie du support, sur une largeur au moins égale à celle du chanfrein, ainsi que du mastic comme matériau de remplissage et enduit en formant une section sensiblement triangulaire.

Selon un perfectionnement, le chanfrein comprend un ruban adhésif armé rapporté sur au moins une partie de la surface du ruban adhésif.

Selon un autre perfectionnement, le dispositif comprend un fil de traction, disposé derrière le ruban adhésif de forte tenue, muni à ses extrémités de moyens de préhension, noyés dans le mastic, en sorte de faciliter la dépose.

L'instrumentation comprend des capteurs fixés sur la face inférieure du support, des passages de communication des capteurs avec les écoulements d'air à la surface extérieure du support et des liaisons filaires entre les capteurs et l'intérieur de la structure, lesdites liaisons courant dans l'espace libre entre la face inférieure du support et la zone déterminée.

Selon un mode de réalisation, l'instrumentation comprend au moins une couche de matériau sensible rapportée sur la surface extérieure du support et au moins deux fils reliés à cette couche à travers deux trous traversants.

Selon un agencement préférentiel, chaque fil est un fil électrique dénudé placé dans le trou, et de la pâte conductrice est introduite dans le trou traversant en sorte d'assurer l'immobilisation du fil, la liaison électrique et simultanément l'obturation de ce trou et la continuité du profil aérodynamique.

Dans le cas d'une prise de pression stationnaire, il est prévu un collecteur avec un logement ménagé dans ledit collecteur, des trous usinés à travers la plaque métallique avec une grande précision pour obtenir un bord net, ces trous débouchant dans le logement, ainsi qu'un embout rigide et un tube souple de liaison.

Une autre variante prévoit une couche de cristaux thermosensibles disposée à la surface extérieure de la plaque dudit support.

Une amélioration consiste en une résistance disposée sur la surface inférieure de la plaque, prévue pour réchauffer ladite plaque et/ou la réguler en température.

Selon encore un autre mode de réalisation, il est prévu un capteur affleurant pour la prise de pression instationnaire, intégré dans la plaque du support.

De façon préférentielle, le support a une épaisseur de l'ordre du millimètre pour une plaque métallique ou pour une plaque en résine époxy.

Le dispositif selon la présente invention est décrit selon un mode de réalisation préférentiel, non limitatif, en évoquant différentes variantes, cette description étant faite en regard des dessins annexés sur lesquels les différentes figures représentent :
- figure 1, une vue d'un tronçon d'aéronef portant le dispositif instrumenté selon l'invention,
- figure 2, une vue en perspective d'une portion courbe d'une structure portant le dispositif instrumenté selon l'invention, par exemple à proximité d'une ouverture naturelle telle qu'une articulation d'aile,
- figure 3A, une vue en coupe transversale d'un dispositif instrumenté tel que celui de la figure 2,
- figure 3B, une vue en coupe longitudinale suivant la ligne 3B-3B de la figure 3A,
- figure 3C, une vue en coupe longitudinale suivant la ligne 3C-3C de la figure 3A,
- figure 4, une vue de détail du montage d'un capteur tel que montré sur la figure 3C, dans ce cas, une prise de pression stationnaire,
- figure 5, une vue de détail du montage d'un autre type de capteur, dans ce cas, un capteur à film chaud,
- figure 6, une vue de détail des liaisons du dispositif avec la structure sur laquelle il est monté, et plus particulièrement sur les bords avec un chanfrein,
- figure 7, une vue de dessous de l'extrémité d'un dispositif, avec un moyen de dépose intégré,
- figure 8, une vue d'un capteur de pression instastionnaire affleurant, intégré dans une plaque, et
- figure 9, une vue en coupe suivant la ligne 9-9 de la figure 8.

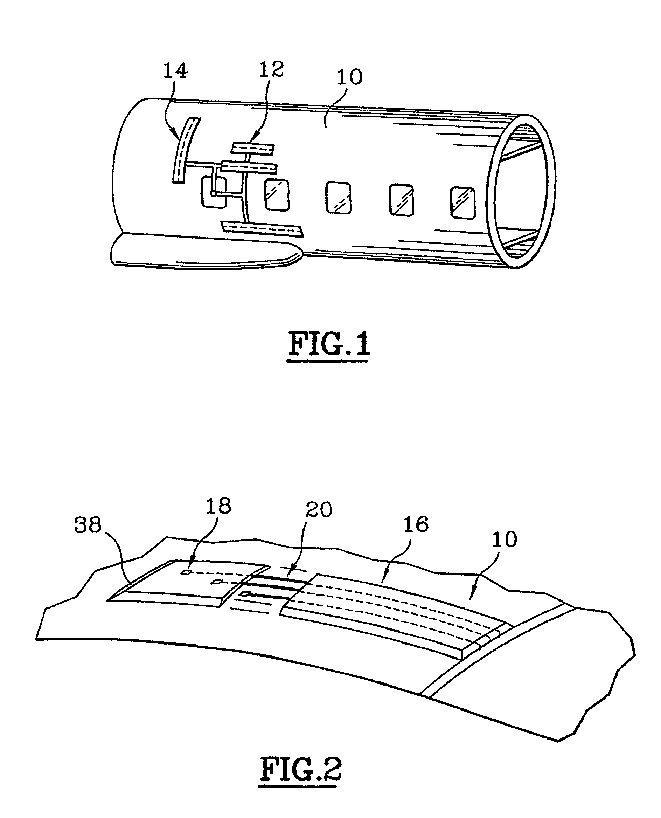

Sur la figure 1, on a représenté une portion de cellule 10 d'avion, sur la paroi extérieure de laquelle est installé un ensemble de dispositifs instrumentés 12 selon la présente invention avec leurs liaisons filaires 14.

En effet, tous les dispositifs instrumentés sont reliés à l'intérieur de la cellule à des moyens d'acquisition de données connus et non représentés, prévus pour collecter l'ensemble des données de la campagne d'essais.

Les liaisons filaires 14 sont prévues pour pénétrer par les ouvertures naturelles de la structure, hublots, articulations de parties mobiles des ailes, ailerons ou dérive en sorte d'éviter toute modification mécanique de la structure.

Chaque dispositif instrumenté est composé d'un support prévu pour être apposé sur la zone prédéterminée et choisie pour l'implantation. Ce support est fabriqué en atelier en fonction des contraintes de formes et des instrumentations retenues pour les essais.

Ainsi, le dispositif est prêt à poser suivant une procédure établie pour garantir la qualité et la fiabilité ainsi que la reproductibilité mais elle reste simple et rapide comme cela sera expliqué ci-après en détail.

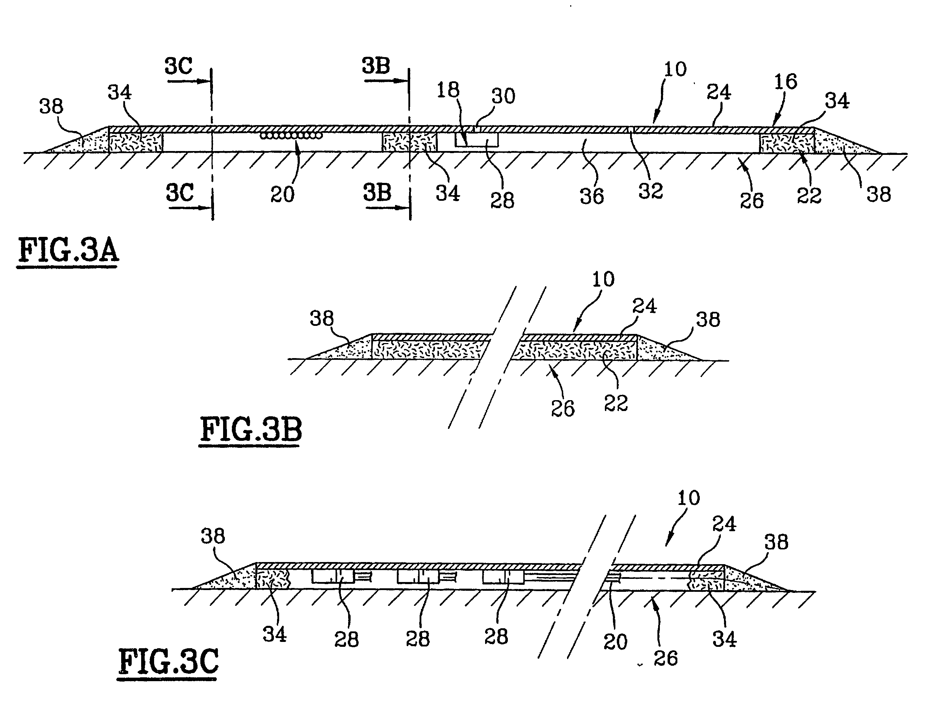

De façon générale, chaque dispositif comprend, comme cela est montré sur les figures 2 et 3A, 3B et 3C, un support 16 résistant mais suffisamment souple pour être conformé suivant le profil de la zone sur laquelle il doit être apposé. Ce support 16 est généralement une plaque 24, métallique ou en matériau polymère suivant les applications comme indiqué plus avant dans la description.

Cette plaque 24, par exemple métallique ou en matériau polymère tel que de l'époxy, est de faible épaisseur, de l'ordre du millimètre.

Ces plaques sont plus particulièrement des bandes relativement étroites pour permettre une instrumentation généralement suivant les lignes d'écoulement de l'air, c'est-à-dire parallèlement aux filets d'air ou perpendiculairement.

La plaque est équipée en atelier de tous les éléments fonctionnels, qu'il s'agisse des capteurs 18 et du faisceau de liaisons 20 qui en est issu, ou des moyens de fixation 22 de ladite plaque sur la structure.

Sur la figure 3A, on a représenté un premier mode de réalisation à partir d'une plaque métallique 24 d'un millimètre d'épaisseur qui est rapportée sur une zone prédéterminée de la structure portant la référence générale 26.

Les capteurs 18 sont de très faible épaisseur et dans le cas présent, il est figuré une prise de pression 28 collée sur la face inférieure de la plaque 24, un trou 30 étant ménagé dans la plaque au droit du lieu précis de prise de pression, déterminé en fonction des mesures à enregistrer.

La plaque comprend en outre des trous 32 d'égalisation de pressions qui permettent d'égaliser les pressions entre l'extérieur et le volume d'air emprisonné sous la plaque, différences de pression qui pourraient provoquer des erreurs de mesures et surtout des surpressions générant des efforts d'arrachement de la plaque par rapport à la structure. De tels trous peuvent avoir des diamètres de l'ordre du millimètre.

Chaque capteur 28, de prise de pression en l'occurrence, est relié par un câble ou un tube, regroupés en faisceau, aux moyens d'acquisition des données situés à l'intérieur de la structure et non représenté. Ce faisceau de liaisons est conduit jusqu'à un passage existant déjà dans la structure, à proximité immédiate du lieu d'apposition de la plaque, ce passage existant devant éventuellement être aménagé, lorsqu'il s'agit de hublots ou d'articulations d'éléments mobiles de la structure, pour permettre son passage étanche, pour assurer la fixation et le guidage sous gaine par exemple au sein des autres chemins de câbles de la structure.

Ces tubes ou câbles en faisceau sont fixés sur la plaque directement, par collage ou dans un collecteur rapporté lui aussi par collage.

Les moyens de fixation 22 de la plaque 24 équipée, sur la structure, comprennent :
- d'une part, parallèlement aux filets d'air ou perpendiculairement aux bords d'attaque ou de fuite, un ruban 34 en mousse adhésive double-face, type "Néoprène", réparti et appliqué en bandes sur la face inférieure de la plaque 24 par sa face collante non protégée, l'autre face restant protégée par une pellicule qui est retirée au moment de l'apposition de la plaque sur la zone déterminée, et
- d'autre part, perpendiculairement aux filets d'air, un ruban 35 de forte tenue, du type acrylique, longeant les extrémités des bandes de ruban 34, en mousse "Néoprène".

Les rubans en mousse adhésive double-face et acrylique ont une épaisseur de l'ordre du millimètre, ce qui libère un volume 36 entre la plaque métallique 24 et la structure 26.

Ainsi que cela est visible sur les différentes figures 3A, 3B et 3C, l'épaisseur totale du dispositif est de l'ordre de 2 millimètres, tout au plus.

Cette épaisseur même très faible pourrait générer des perturbations dans l'écoulement de l'air, non pas tellement à cause de la valeur intrinsèque de l'épaisseur mais surtout par le décrochement des filets d'air sur les bords.

Aussi il est prévu un chanfrein périphérique 38, qui adoucit les effets pervers du bord et qui remplit également d'autres fonctions.

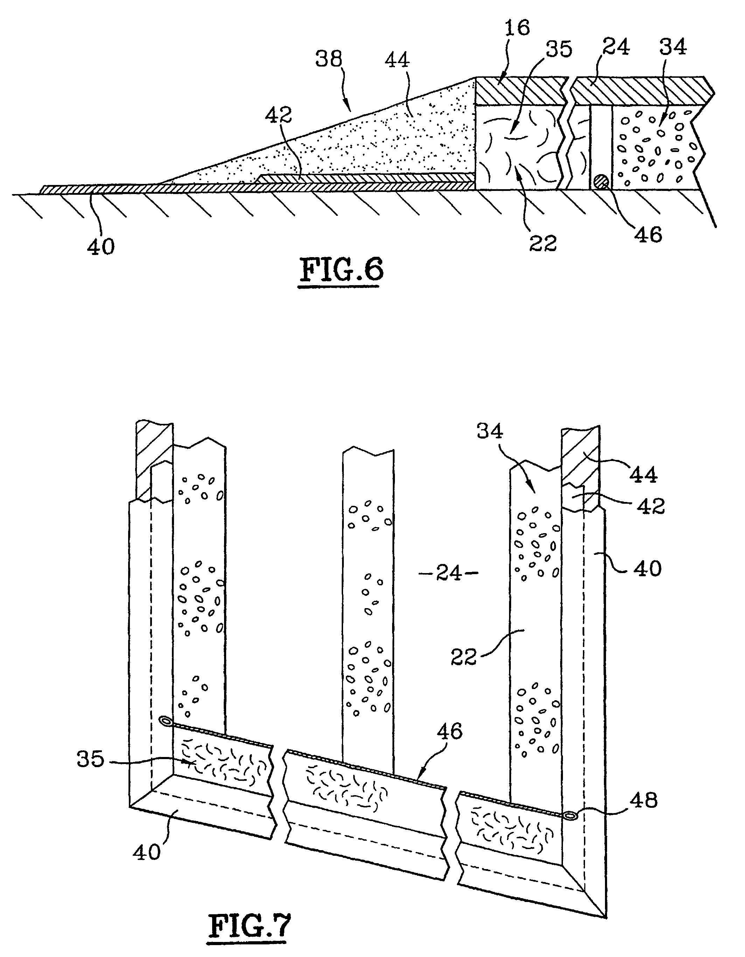

On se reporte utilement aux figures 6 et 7 qui montrent en détail un tel chanfrein 38.

Tout d'abord, en périphérie de la plaque, il est prévu de disposer suivant un mode de réalisation préférentiel, une couche 40 d'un premier ruban adhésif tel qu'un ruban en aluminium qui assure la protection de la surface du support de toute souillure par un matériau de remplissage 44 comme cela sera expliqué ultérieurement.

Sur ce premier ruban adhésif 40, il est prévu un second ruban adhésif 42, du type adhésif armé de fibres de verre, d'une largeur moins importante que celle du matériau de remplissage 44 formant le chanfrein proprement dit. Ce second ruban adhésif a pour but de faciliter la dépose car il permet de retirer la totalité du mastic et du premier ruban adhésif 40, par pelage.

Ce matériau de remplissage 44 est un mastic dans le mode de réalisation représenté. Il est disposé pour combler la différence d'épaisseur entre la face supérieure de la plaque 16 et la face supérieure du ruban adhésif 40.

Ce mastic est disposé en fin d'opération, pour assurer une bonne finition.

On remarque aussi sur la figure 7, un lien 46 disposé derrière la couche d'adhésif de forte tenue 35, perpendiculairement aux filets d'air, longeant les extrémités des rubans en mousse adhésive double-face 34.

Ce lien se prolonge légèrement au-delà des bords longitudinaux de la plaque, de chaque côté, par une boucle 48 de préhension, ces boucles étant noyées dans le matériau de remplissage.

Un tel lien facilite le retrait du dispositif car après saisie des boucles, une fois une partie du mastic retirée, il suffit d'exercer une traction pour cisailler la couche d'adhésif de forte tenue ou pour le moins d'amorcer son décollement.

L'ensemble du chanfrein est retiré simultanément aux rubans adhésifs sous-jacents, ce qui libère l'accès à la plaque et l'on sait que le ruban en mousse adhésive double-face 34 peut être retiré aisément par pelage, après avoir retiré la plaque 24, si ce ruban n'est pas venu directement avec la plaque.

La structure se retrouve dès lors dans l'état premier, avant la pose du dispositif, sans dégradation.

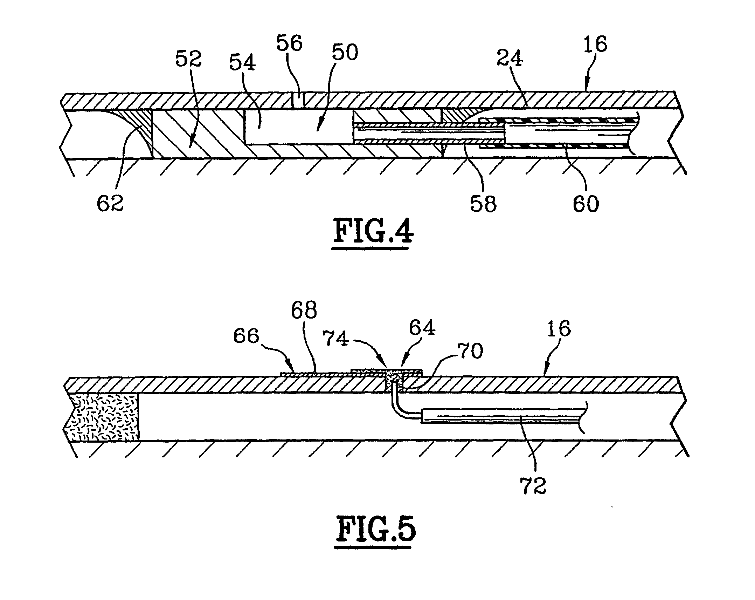

Sur la figure 4, on a représenté une prise de pression stationnaire 50. Cette prise de pression comprend un collecteur 52, avec un logement 54 ménagé dans ledit collecteur. Des trous 56 sont usinés avec une grande précision pour obtenir un bord net, à travers la plaque métallique 24.

Ces trous débouchent dans le logement 54.

Le collecteur est complété par un embout rigide 58, qui, d'une part, débouche, sans saillir, à l'intérieur du logement 54 et d'autre part fait saillie hors du collecteur pour permettre son raccordement à un tube souple 60 de liaison.

Ce collecteur est fixé par collage sous la plaque 24 en regard des trous 56.

Un cordon 62 assure l'étanchéité du collecteur avec la face inférieure de la plaque 24.

De même, sur la figure 5, on a représenté un montage d'un capteur 64 du type à film chaud.

Un film chaud 66 est réalisé par dépôt métallique 68 sous vide, directement sur la face supérieure de la plaque qui est en un matériau isolant suffisamment rigide mécaniquement, en l'occurrence en résine époxy.

Le film chaud ainsi réalisé sur toute la surface réservée, les pistes de connexion se prolongeant jusqu'au droit de trous 70 préalablement usinés dans la plaque pour les liaisons électriques avec les câbles d'alimentation 72.

Chaque câble est dénudé à son extrémité, cette partie dénudée étant disposée dans le trou correspondant qui est empli d'une pâte conductrice 74, qui déborde en surface sur une très faible épaisseur, assurant ainsi la continuité électrique entre le film chaud et le câble.

Cette pâte conductrice assure simultanément l'obturation du trou dans lequel elle est disposée et la continuité du profil aérodynamique.

On peut assurer que la surépaisseur est limitée à quelques micromètres, ce qui peut être considéré comme négligeable vis-à-vis des perturbations engendrées sur les écoulements.

Dans certains cas de recours à d'autres types de visualisation tels que la mise en évidence des écoulements par contraste thermique, grâce à une caméra infrarouge, il est nécessaire de réchauffer la plaque et que celle-ci n'ait pas une conductivité thermique trop grande, si bien que celle-ci est réalisée plutôt en résine époxy et une résistance est disposée sur la face inférieure de la plaque. La méthode pour réaliser une telle résistance de faible épaisseur s'apparente à la technique de réalisation des circuits imprimés et reste à la portée de l'homme de l'art.

Cette visualisation peut aussi être effectuée grâce à des cristaux thermosensibles, déposés par projection sur la surface externe de la plaque. Dans ce cas, la résistance qui vient d'être évoquée est aussi utilisée, elle permet de maintenir les cristaux liquides dans la plage de températures de fonctionnement.

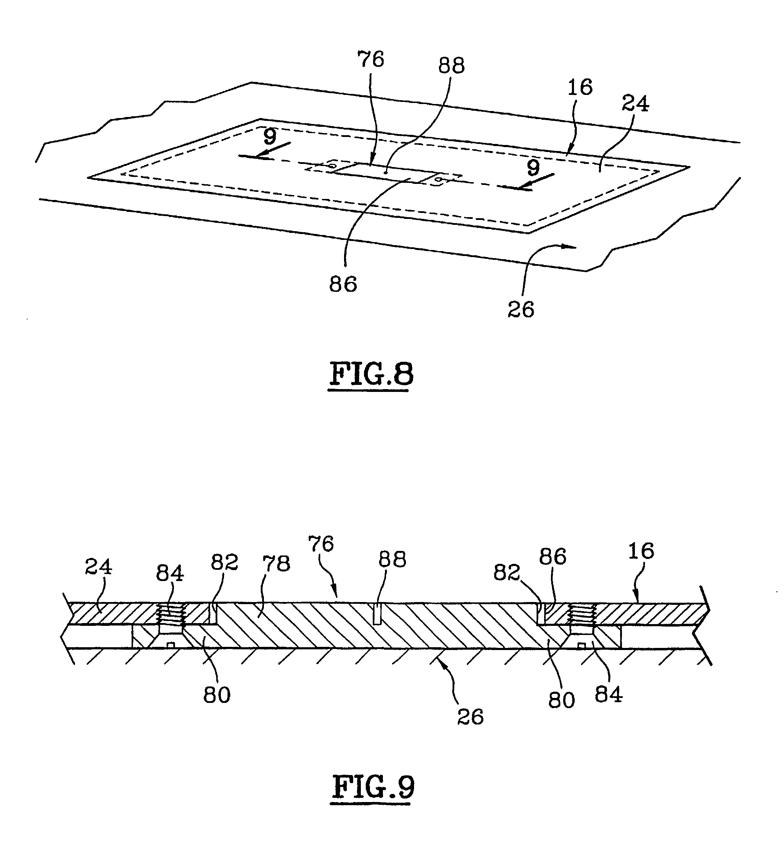

On peut aussi utiliser un capteur affleurant 76 pour la mesure de pression instationnaire. On se reporte aux figures 8 et 9 sur lesquelles on a représenté un tel capteur.

Le capteur 76 comprend un corps 78 plat d'une épaisseur au plus égale à la distance qui sépare la surface à instrumenter 26 de la face supérieure de la plaque 24 du support 16. Ce capteur comprend deux pattes 80 d'une épaisseur au plus égale à la hauteur libre sous la plaque avec un décrochement 82. Deux vis 84 solidarisent le corps du capteur par les pattes, avec la plaque 16. Ainsi la surface du capteur est affleurante à la surface de la plaque 24, à travers un trou 86, ménagé dans cette plaque 24, trou qui est aux dimensions exactes du corps du capteur.

Le capteur comprend de façon connue un ajutage calibré 88 pour la prise de pression. Cet ajutage est relié à l'instrumentation embarquée, ceci de façon identique aux capteurs précédents.

On constate que les différents capteurs qui viennent d'être décrits permettent de mesurer sur la structure même des paramètres concernant les écoulements d'air sans pour autant perturber ces écoulements.

La structure n'est soumise à aucune modification mécanique touchant à son intégrité si bien que les procédures de mise en place et de retrait restent très simples.

La très faible épaisseur des plaques permet une conformation sur la plus grande partie de la surface des structures, en tous cas pour les avions dont les angles vifs sont absents par construction même.

## Revendications

1. Dispositif instrumenté, notamment pour l'étude des écoulements aérodynamiques sur une structure (10), plus particulièrement celle d'un aéronef en vol, comprenant un support (16) formant une plaque (24) de très faible épaisseur, prévue pour être apposée conformée sur une zone déterminée de ladite structure, ainsi qu'une instrumentation (18) rapportée sur ce support et comprenant des liaisons filaires (20), **caractérisé par** des moyens (22) de liaison par collage interposés entre une partie de la surface de la face inférieure du support et cette zone déterminée, en laissant un espace (36) de faible hauteur entre la face inférieure de la plaque (24) du support et la zone déterminée correspondant sensiblement à l'épaisseur des moyens de collage, une partie des éléments (28) de ladite instrumentation ainsi que les liaisons filaires (20) étant logées dans cet espace (36) délimité par la face inférieure de la plaque du support et la zone déterminée de la structure (26), l'ensemble formant alors une peau sur ladite structure.

2. Dispositif instrumenté selon la revendication 1, **caractérisé en ce que** les moyens (22) de liaison par collage comprennent du ruban adhésif double-face (34, 35) d'une épaisseur de l'ordre du millimètre.

3. Dispositif instrumenté selon la revendication 1 ou 2, **caractérisé en ce que** le ruban adhésif comprend du ruban adhésif type mousse "Néoprène" (34), disposé en bandes parallèlement aux filets d'air et du ruban adhésif de forte tenue (35), type acrylique, disposé en bandes perpendiculairement aux filets d'air.

4. Dispositif instrumenté selon la revendication 1,2 ou 3, **caractérisé en ce que** le support (16) est une plaque (24) métallique ou en matériau polymère de faible largeur et de grande longueur en sorte de pouvoir couvrir la zone (26) retenue et se prolonger jusqu'à proximité d'une zone naturelle d'accès à l'intérieur de la structure.

5. Dispositif instrumenté selon l'une quelconque des revendications précédentes, **caractérisé en ce qu'**il comprend un chanfrein (38) sur la périphérie du support (16).

6. Dispositif instrumenté selon la revendication 5, **caractérisé en ce que** le chanfrein (38) est composé d'un ruban (40) adhésif protecteur de cette structure, disposé autour de la périphérie du support, sur une largeur au moins égale à celle du chanfrein, ainsi que du mastic (44) comme matériau de remplissage et enduit en formant une section sensiblement triangulaire.

7. Dispositif instrumenté selon la revendication 6, **caractérisé en ce qu'**il comprend un ruban (42) adhésif armé rapporté sur au moins une partie de la surface du ruban (40) adhésif.

8. Dispositif instrumenté selon l'une quelconque des revendications 3 à 7, **caractérisé en ce qu'**il comprend un fil (46) de traction, disposé derrière le ruban adhésif (35) de forte tenue , muni à ses extrémités de moyens (48) de préhension, noyés dans le mastic (44), en sorte de faciliter la dépose.

9. Dispositif instrumenté selon l'une quelconque des revendications précédentes, **caractérisé en ce que** l'instrumentation comprend des capteurs (18) fixés sur la face inférieure du support (16), des passages (30) de communication des capteurs avec les écoulements à la surface extérieure du support et des liaisons filaires (20) entre les capteurs et l'intérieur de la structure, lesdites liaisons courant dans l'espace libre (36) entre la face inférieure du support (16) et la zone déterminée (26).

10. Dispositif instrumenté selon l'une quelconque des revendications précédentes, **caractérisé en ce qu'**il comprend un capteur à film chaud composé d'au moins une couche de matériau sensible (68) rapportée sur la surface extérieure du support (16) et au moins deux fils (72) reliés à cette couche à travers des trous traversants (70).

11. Dispositif instrumenté selon la revendication 10, **caractérisé en ce que** chaque fil est un fil électrique dénudé placé dans le trou et **en ce qu'**il comprend de la pâte conductrice (74) introduite dans le trou traversant (70) en sorte d'assurer l'immobilisation du fil, la liaison électrique, l'obturation de ce trou et la continuité du profil aérodynamique.

12. Dispositif instrumenté selon l'une quelconque des revendications 1 à 9, **caractérisé en ce que** le support (16) comprend une couche de cristaux thermosensibles disposée à la surface extérieure de la plaque (24) dudit support.

13. Dispositif instrumenté selon l'une des revendications 10, 11 ou 12, **caractérisé en ce qu'**il comprend une résistance à la surface inférieure de la plaque, prévue pour réguler en température ladite plaque.

14. Dispositif instrumenté selon la revendication 9, **caractérisé en ce qu'**il comprend une prise de pression stationnaire (50) qui comprend un collecteur (52), avec un logement (54) ménagé dans ledit collecteur ainsi que des trous (56) usinés avec une grande précision pour obtenir un bord net, à travers la plaque (24), ces trous débouchant dans le logement (54), un embout rigide (58) et un tube souple (60) de liaison.

15. Dispositif instrumenté selon la revendication 9, **caractérisé en ce qu'**il comprend un capteur affleurant (76) pour la prise de pression instationnaire, intégré dans la plaque (24) du support.

16. Dispositif instrumenté selon l'une quelconque des revendications précédentes, **caractérisé en ce que** le support (16) a une épaisseur de l'ordre du millimètre pour une plaque métallique ou une plaque en résine époxy.

## Patentansprüche

1. Mit Instrumenten versehene Vorrichtung, insbesondere für die Untersuchung von aerodynamischen Strömungen an einer Struktur (10), insbesondere jener eines im Flug befindlichen Flugzeugs, umfassend einen Träger (16), der eine Platte (24) mit sehr geringer Dicke bildet und dazu vorgesehen ist, an einer bestimmten Zone der Struktur passend angebracht zu werden, sowie eine instrumentelle Ausrüstung (18), die mit diesem Träger verbunden ist und Drahtverbindungen (20) besitzt, **gekennzeichnet durch** Mittel (22) für eine Klebeverbindung, die zwischen einen Teil der Oberfläche der Unterseite des Trägers und diese bestimmte Zone eingefügt sind und einen Raum (36) mit geringer Höhe zwischen der Unterseite der Platte (24) des Trägers und der bestimmten Zone freilassen, der im wesentlichen der Dicke der Klebemittel entspricht, wobei sich ein Teil der Elemente (28) der instrumentellen Ausrüstung sowie die Drahtverbindungen (20) in diesem **durch** die Unterseite der Platte des Trägers und die bestimmte Zone der Struktur (26) begrenzten Raum (36) befinden, wobei die Gesamtheit dann auf dieser Struktur eine Haut bildet.

2. Mit Instrumenten versehene Vorrichtung nach Anspruch 1, **dadurch gekennzeichnet, daß** die Mittel (22) für die Klebeverbindung ein doppelseitiges Klebeband (34, 35) mit einer Dicke in der Größenordnung von Millimetern umfassen.

3. Mit Instrumenten versehene Vorrichtung nach Anspruch 1 oder 2, **dadurch gekennzeichnet, daß** das Klebeband ein Klebeband des Typs "Neopren"-Schaum (34), das in Streifen parallel zu den Luftstrahlen angeordnet ist, und ein Klebeband mit hoher Spannungsfestigkeit (35) des Acryl-Typs, das in Streifen senkrecht zu den Luftstrahlen angeordnet ist, umfaßt.

4. Mit Instrumenten versehene Vorrichtung nach Anspruch 1, 2 oder 3, **dadurch gekennzeichnet, daß** der Träger (16) eine Metallplatte (24) oder eine Platte aus einem Polymerwerkstoff mit geringer Breite und großer Länge ist, derart, daß er die Stauzone (26) abdecken kann und sich bis in die Umgebung einer eigentlichen Zone für den Zugang zum Innenraum der Struktur erstrecken kann.

5. Mit Instrumenten versehene Vorrichtung nach einem der vorhergehenden Ansprüche, **dadurch gekennzeichnet, daß** sie auf dem Umfang des Trägers (16) eine Fase (38) umfaßt.

6. Mit Instrumenten versehene Vorrichtung nach Anspruch 5, **dadurch gekennzeichnet, daß** die Fase (38) aus einem Klebeband (40) für den Schutz dieser Struktur, das um den Umfang des Trägers über eine Breite angeordnet ist, die wenigstens gleich jener der Fase ist, sowie aus Mastixharz (44) als Füllmaterial und als Überzug, indem es einen im wesentlichen dreieckigen Querschnitt bildet, aufgebaut ist.

7. Mit Instrumenten versehene Vorrichtung nach Anspruch 6, **dadurch gekennzeichnet, daß** sie ein verstärktes Klebeband (42) umfaßt, das wenigstens mit einem Teil der Oberfläche des Klebebandes (40) verbunden ist.

8. Mit Instrumenten versehene Vorrichtung nach einem der Ansprüche 3 bis 7, **dadurch gekennzeichnet, daß** sie einen Ziehdraht (46) umfaßt, der hinter dem Klebeband (35) mit hoher Zugfestigkeit angeordnet und an seinen Enden mit in das Mastixharz (44) getauchten Greifmitteln (48) versehen ist, um ihre Beseitigung zu erleichtern.

9. Mit Instrumenten versehene Vorrichtung nach einem der vorhergehenden Ansprüche, **dadurch gekennzeichnet, daß** die instrumentelle Ausrüstung Sensoren (18), die an der Unterseite des Trägers (16) befestigt sind, Kanäle (30) für die Kommunikation der Sensoren mit den Strömungen an der äußeren Oberfläche des Trägers sowie Drahtverbindungen (20) zwischen den Sensoren und dem Innenraum der Struktur umfaßt, wobei die Verbindungen im freien Raum (36) zwischen der Unterseite des Trägers (16) und der bestimmten Zone (26) verlaufen.

10. Mit Instrumenten versehene Vorrichtung nach einem der vorhergehenden Ansprüche, **dadurch gekennzeichnet, daß** sie einen Heißfilm-Sensor umfaßt, der wenigstens aus einer Schicht (68) aus empfindlichem Material, die an die äußere Oberfläche des Trägers (16) angefügt ist, und wenigstens zwei Drähten (72), die mit dieser Schicht durch Durchgangslöcher (70) hindurch verbunden sind, aufgebaut ist.

11. Mit Instrumenten versehene Vorrichtung nach Anspruch 10, **dadurch gekennzeichnet, daß** jeder Draht ein abisolierter elektrischer Draht ist, der in dem Loch angeordnet ist, und daß sie leitende Paste (74) umfaßt, die in das Durchgangsloch (70) eingegeben worden ist, derart, daß die Unbeweglichmachung des Drahts, die elektrische Verbindung, der Verschluß dieses Lochs und die Kontinuität des aerodynamischen Profils sichergestellt sind.

12. Mit Instrumenten versehene Vorrichtung nach einem der Ansprüche 1 bis 9, **dadurch gekennzeichnet, daß** der Träger (16) eine wärmeempfindliche Kristallschicht umfaßt, die auf der äußeren Oberfläche der Platte (24) des Trägers angeordnet ist.

13. Mit Instrumenten versehende Vorrichtung nach einem der Ansprüche 10, 11 oder 12, **dadurch gekennzeichnet, daß** sie auf der unteren Fläche der Platte einen Widerstand aufweist, der dazu vorgesehen ist, die Temperatur der Platte einzustellen.

14. Mit Instrumenten versehene Vorrichtung nach Anspruch 9, **dadurch gekennzeichnet, daß** sie einen Abgriff (50) für stationären Druck besitzt, der einen Sammler (52) mit einem in dem Sammler ausgesparten Aufnahmesitz (54), durch die Platte (24) verlaufende Löcher (56), die mit hoher Präzision bearbeitet sind, um eine scharfe Kante zu erhalten, und in den Aufnahmesitz (54) münden, einen starren Ansatz (58) sowie ein biegsames Verbindungsrohr (60) umfaßt.

15. Mit Instrumenten versehene Vorrichtung nach Anspruch 9, **dadurch gekennzeichnet, daß** sie einen versenkten Sensor (76) für den Abgriff des nicht stationären Drucks, der in die Platte (24) des Trägers integriert ist, umfaßt.

16. Mit Instrumenten versehene Vorrichtung nach einem der vorhergehenden Ansprüche, **dadurch gekennzeichnet, daß** der Träger (16) eine Dicke in der Größenordnung von Millimetern für eine Metallplatte oder eine Platte aus Epoxidharz besitzt.

## Claims

1. Instrumented device, notably for studying aerodynamic flows on a structure (10), particularly that of an aircraft in flight, comprising a support (16) forming a very thin plate (24), designed to be placed shaped on a given area of said structure as well as instrumentation (18) attached to this support, and comprising wired connections (20), **characterised by** including means (22) for connection by adhesive bonding interposed between part of the surface of the bottom face of the support and the given area, leaving a shallow space (36) between the bottom face of the plate (24) of the support and the given area corresponding substantially to the thickness of the adhesive bonding means, a part of the elements (28) of said instrumentation and the wired connections (20) being housed in this space (36) delimited by the bottom face of the plate of the support and the given area of the structure (26), the whole then forming a skin on said structure.

2. Instrumented device according to claim 1, **characterised in that** the means (22) for connection by adhesive bonding comprise double-face adhesive ribbon (34, 35) with a thickness of around a millimetre.

3. Instrumented device according to claim 1 or 2, **characterised in that** the adhesive ribbon comprises adhesive ribbon of "Neoprene" foam type (34), disposed in strips parallel to the air streams, and high-strength adhesive ribbon (35), of acrylic type, disposed in strips perpendicularly to the air streams.

4. Instrumented device according to claim 1, 2 or 3, **characterised in that** the support (16) is a metallic plate (24) or one made from polymer material, narrow and long so as to be able to cover the selected area (26) and to extend to a point close to a natural area for access to the inside of the structure.

5. Instrumented device according to any preceding claim, **characterised in that** it comprises a chamfer (38) on the periphery of the support (16).

6. Instrumented device according to claim 5, **characterised in that** the chamfer (38) is composed of an adhesive ribbon (40) protecting this structure, disposed around the periphery of the support, over a width at least equal to that of the chamfer, as well as putty (44) as a filling material and coated forming a substantially triangular section.

7. Instrumented device according to claim 6, **characterised in that** it comprises a reinforced adhesive ribbon (42) attached to at least part of the surface of the adhesive ribbon (40).

8. Instrumented device according to any one of claims 3 to 7, **characterised in that** it comprises a traction wire (46), disposed behind the high-strength adhesive ribbon (35), provided at its ends with gripping means (48), embedded in the putty (44), so as to facilitate positioning.

9. Instrumented device according to any preceding claim, **characterised in that** the instrumentation comprises sensors (18) fixed to the bottom face of the support (16), passages (30) for communication of the sensors with the flows on the external surface of the support and wired connections (20) between the sensors and the inside of the structure, said connections running in the free space (36) between the bottom face of the support (16) and the given area (26).

10. Instrumented device according to any preceding claim, **characterised in that** it comprises a hot film sensor provided with at least one layer of sensitive material (68) attached to the external surface of the support (16) and at least two wires (72) connected to this layer through holes (70) passing therethrough.

11. Instrumented device according to claim 10, **characterised in that** each wire is a bared electric wire placed in the hole and **in that** it comprises conductive paste (74) introduced into the through hole (70) so as to provide immobilisation of the wire, the electrical connection, the closing off of this hole and the continuity of the aerodynamic profile.

12. Instrumented device according to any one of claims 1 to 9, **characterised in that** the support (16) comprises a layer of heat-sensitive crystals disposed on the external surface of the plate (24) of said support.

13. Instrumented device according to one of claims 10, 11 or 12, **characterised in that** it comprises a resistor at the bottom surface of the plate, provided for regulating the temperature of said plate.

14. Instrumented device according to claim 9, **characterised in that** it comprises a stationary pressure device (50) which comprises a manifold (52), with a housing (54) provided in said manifold as well as holes (56) machined with high precision in order to obtain a clean edge, through the plate (24), these holes opening out in the housing (54), a rigid connecting piece (58) and a flexible connecting tube (60).

15. Instrumented device according to claim 9, **characterised in that** it comprises a flush sensor (76) for the non-stationary pressure device, integrated in the plate (24) of the support.

16. Instrumented device according to any preceding claim, **characterised in that** the support (16) has a thickness of around one millimetre for a metallic plate or a plate made from epoxy resin.
